# EUROPEAN PATENT APPLICATION

(11) **EP 3 786 835 A1**
(43) Date of publication of application: **03.03.2021**
(21) Application number: 19916553.1
(22) Date of filing: 22.08.2019
(51) Int. Cl.: G06K 9/00, G06K 9/34

(54) **TRAFFIC IMAGE RECOGNITION METHOD AND APPARATUS, AND COMPUTER DEVICE AND MEDIUM**

(30) Priority: 25.02.2019 CN 201910138054
(71) Applicant: BAIDU ONLINE NETWORK TECHNOLOGY (BEIJING) CO., LTD., Beijing 100085 (CN)
(72) Inventor: LIU, Yan, Haidian District, Beijing 100085 (CN); WANG, Yang, Haidian District, Beijing 100085 (CN); HAO, Xin, Haidian District, Beijing 100085 (CN); WU, Yuesheng, Haidian District, Beijing 100085 (CN)
(74) Representative: V.O.
(86) International application number: PCT/CN2019/102027
(87) International publication number: WO 2020/173056

(57) **Abstract**

Disclosed in embodiments of the present disclosure are a traffic image recognition method and apparatus, and a computer device and a medium. The method comprises: obtaining a video stream acquired by a vehicle and extracting each image frame in the video stream as a first image; inputting the first image to an interference removal autoencoder for preprocessing to filter the interference in the first image and output a second image, wherein the interference removal autoencoder is obtained by training by using at least two types of interference sample sets, and disturbance modes added to different types of interference sample sets comprise at least two of the following: noise, affine change, filter blurring, brightness change, and monochromation; and inputting the second image to a traffic sign recognition model for recognition processing. The embodiments of the present disclosure provide an approach for correctly identifying the traffic sign after an adversarial sample attacks the traffic sign recognition model, and can reduce the interference on the adversarial sample in a traffic image, improve the recognition accuracy of the image, and improve the safety of unmanned driving or intelligent driving.

## Description

### CROSS-REFERENCE TO RELATED APPLICATION

This application claims the priority from Chinese Application No. 201910138054.7, filed with the Chinese Patent Office on February 25, 2019, the entire disclosure of which is hereby incorporated by reference.

### TECHNICAL FIELD

Embodiments of the present disclosure relate to the field of autonomous driving image processing technology, for example, to a method and apparatus for recognizing a traffic image, a computer device and a medium.

### BACKGROUND

During driving or intelligent driving control, an autonomous vehicle acquires information such as a traffic light and a traffic indication board in the form of a video stream. For example, a driving control system preprocesses a video collected by a camera or a radar to obtain a image containing feature information, and then input the image containing the feature information into a classification model for the traffic light and the traffic indication board to perform a prediction, for example, determine whether the traffic light is red or green, and that the traffic indication board is a speed limit of 60 km or a parking indication board.

However, the classification model in an autonomous vehicle system is usually a deep learning model, and is very easily attacked by an adversarial sample, resulting in a wrong determination. For example, a small image is pasted onto a road sign or a traffic light, and thus, an adversarial sample is constructed on the small image, resulting in the wrong determination of the classification model. Accordingly, the road sign or the traffic light cannot be recognized normally, thereby affecting the safety of the driving of the unmanned vehicle.

### SUMMARY

The following is the summary of the subject matter described in detail herein. This summary is not intended to limit the scope of the claims.

Embodiments of the present disclosure provide a method and apparatus for recognizing a traffic image, a computer device and a medium, to reduce interferences from an adversarial sample in a traffic image, improve the accuracy of image recognition, and improve the safety of intelligent driving.

In a first aspect, some embodiments of the present disclosure provide a method for recognizing a traffic image, the method includes: acquiring a video stream collected by a vehicle, and extracting each frame of image in the video stream as a first image; inputting the first image into a de-interference autoencoder for pre-processing, to filter out an interference in the first image and output a second image, the de-interference autoencoder being obtained by training with at least two types of interference sample sets, and disturbance modes added to different types of interference sample sets including at least two of: noise, an affine transformation, filter blurring, a brightness transformation, or monochromatization; and inputting the second image into a traffic sign recognition model for recognition processing.

In a second aspect, some embodiments of the present disclosure provide an apparatus for recognizing a traffic image, the method includes: a image collecting module, configured to acquire a video stream collected by a vehicle, and extract each frame of image in the video stream as a first image; a image pre-processing module, configured to input the first image into a de-interference autoencoder for pre-processing, to filter out an interference in the first image and output a second image, the de-interference autoencoder being obtained by training with at least two types of interference sample sets, and disturbance modes added to different types of interference sample sets including at least two of: noise, an affine transformation, filter blurring, a brightness transformation, or monochromatization; and a image recognizing module, configured to input the second image into a traffic sign recognition model for recognition processing.

In a third aspect, some embodiments of the present disclosure provide an electronic device, the device includes: at least one processor; and a storage device, configured to store at least one program, where the at least one program, when executed by the at least one processor, cause the at least one processor to implement the method for recognizing a traffic image according to any one of embodiments of the present disclosure.

In a fourth aspect, some embodiments of the present disclosure provide a computer readable storage medium, storing a computer program, where the computer program, when executed by a processor, cause the method for recognizing a traffic image according to any one of embodiments of the present disclosure to be implemented.

In embodiments of the present disclosure, the image in the video stream collected by the vehicle is inputted into the de-interference autoencoder, and an image in which the interferences are filtered out is obtained through the pre-processing by the de-interference autoencoder. Then, the non-interference image is inputted into the traffic sign recognition model for recognition processing, such that a correct vehicle control instruction can be subsequently generated, thereby solving the problem that a wrong recognition on the traffic sign is caused by the attack of the adversarial sample against the traffic sign recognition model. In addition, the interference of the adversarial sample in the traffic image may be reduced, and thus, the accuracy of the image recognition is improved, and the safety of the autonomous driving or intelligent driving is improved.

Other aspects will become apparent upon reading and understanding the accompanying drawings and the detailed description.

### BRIEF DESCRIPTION OF THE DRAWINGS

Fig. 1 is a flowchart of a method for recognizing a traffic image in a first embodiment of the present disclosure;
Fig. 2a is a flowchart of a method for recognizing a traffic image in a second embodiment of the present disclosure;
Fig. 2b is a schematic structural diagram of an autoencoder neural network in the second embodiment of the present disclosure;
Fig. 3 is a schematic structural diagram of an apparatus for recognizing a traffic image in a third embodiment of the present disclosure; and
Fig. 4 is a schematic structural diagram of a computer device in a fourth embodiment of the present disclosure.

### DETAILED DESCRIPTION OF EMBODIMENTS

Embodiments of the present disclosure are further described below in detail with reference to the accompanying drawings. It may be appreciated that the specific embodiments described herein are merely used for explaining embodiments of the present disclosure, rather than limiting the present disclosure. It should also be noted that, for ease of description, only some, but not all, of structures related to the embodiments of the present disclosure are shown in the accompanying drawings.

### First Embodiment

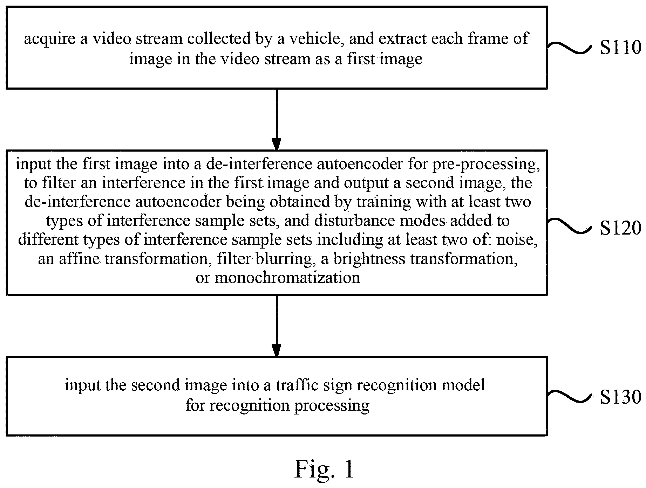

Fig. 1 is a flowchart of a method for recognizing a traffic image provided by a first embodiment. This embodiment may be applicable to a situation where an attack, which is based on an adversarial sample, on a model for recognizing a road sign and a traffic light of an autonomous vehicle or of an intelligent driving control system is resisted. The method may be implemented by an apparatus for recognizing a traffic image, and specifically implemented by means of software and/or hardware in a device, for example, an autonomous driving vehicle or a vehicle driving control system in an intelligent driving vehicle. As shown in Fig. 1, the method for recognizing a traffic image includes:
S110, acquiring a video stream collected by a vehicle and extracting each frame of image in the video stream as a first image.

Here, the vehicle may be an autonomous driving vehicle or a vehicle having an intelligent driving function. The two types of vehicle are all provided with a camera, a radar, or a camera and a radar, for collecting the video stream of the forward direction and the surrounding of the vehicle during the travelling of the vehicle. The image content in the video stream typically includes a traffic sign, a signal light, a lane line, another vehicle, a pedestrian, a building, etc. The collected video stream is transmitted to the control system of the vehicle, and then the control system extracts each frame of image, i.e., the first image, from the video stream as an target object to be analyzed. The extracted each frame of image may be understood as a target image subjected to other processing, on which the traffic sign recognition is ascertained to be performed.

S120, inputting the first image into a de-interference autoencoder for pre-processing, to filter an interference in the first image and output a second image, the de-interference autoencoder being obtained by training with at least two types of interference sample sets, and disturbance modes added to different types of interference sample sets including at least two of: noise, an affine transformation, filter blurring, a brightness transformation, or monochromatization.

The first image may contain or not contain information having a function of traffic indication, for example, a traffic sign, a signal light, or a lane line. Here, the first image containing the information for traffic indication generally plays a crucial role in the control of the vehicle. In some situations, the traffic sign (e.g., a traffic indication board, the signal light or the lane line) is interfered by being pasted with an advertisement or a tag, or superimposed with an image, such that the traffic sign cannot be correctly recognized by a traffic sign recognition model, thereby causing a violation of a traffic rule and even causing harm to the personal safety of a passenger and the public traffic safety.

Therefore, before the image containing the traffic sign is inputted into the traffic sign recognition model, pre-processing is required to be performed on the image, to filter out the interference information that may be present in the image, which is equivalent to extracting the key object information in the image.

For example, the first image may be inputted to the de-interference autoencoder to perform the pre-processing, and thus, when the first image containing the traffic sign information contains the interference information, the interference information may be filtered out to obtain the second image, that is, a non-interference image. For a first image which does not contain traffic sign information and a first image which contains the traffic sign information but in which interference information is not added, the pre-processing of the de-interference autoencoder does not have a significant impact on the images, and thus, output images close to the original image may be obtained. The de-interference autoencoder is obtained by training with at least two types of interference sample sets. Not only the interference of single image interference mode, but also the interference of a combination of various interference processing modes may be filtered out, thereby improving the disturbance filtering effect in an adversarial sample image.

Each type of anti-interference sample set contains at least one sample pair, and each sample pair contains an original image and an adversarial sample corresponding to the original image. In one type of anti-interference sample set, as compared with the corresponding original image, disturbance processing of the same type is performed on each anti-interference sample. The so-called same type means that adopted combinations of disturbance modes are identical. A combination of disturbance modes may include a single disturbance mode, or may include a combination of two or more disturbance modes. In one type of anti-interference sample set, the adopted combinations of disturbance modes are identical, but the specific parameter used for each disturbance mode therein may be the same or different. The disturbance mode used in embodiments of the present disclosure may be more than one. Alternatively, the disturbance mode includes at least two of the noise, the affine transformation, the filter blurring, the brightness transformation, or the monochromatization.

In a preferred implementation, before the first image is inputted into the de-interference autoencoder for the pre-processing, compression processing may also be performed on the first image at the color dimension, i.e., compression processing in terms of RGB color information, gray scale, or RGB color information and gray scale, etc. This is because the recognition for a traffic sign depends mainly on the structure, shape and main color of the pattern of the traffic sign, and is not sensitive to a detailed color. Generally, the colors of the traffic sign presented and collected in the sunlight and darkness are also different, and thus, the compression for the subtle difference in colors does not affect the recognition for the pattern of a traffic sign. After the image is compressed at the color dimension, the amount of data calculated during image processing may be reduced.

S130, inputting the second image into a traffic sign recognition model for recognition processing.

Here, the traffic sign recognition model is generally a network model based on deep learning.

The traffic sign recognition model may recognize feature information in the second image, and determine whether the feature information belongs to any traffic sign, such as a speed limit indicator or a traffic light, for the decision module of the driving control system of the vehicle to make a control decision according to the recognition result of the traffic sign recognition model, to perform the control during the travelling of the vehicle.

According to the technical solution of this embodiment, the image in the video stream collected by the vehicle is inputted into the de-interference autoencoder, and an image in which the interferences are filtered out is obtained through the pre-processing by the de-interference autoencoder. Then, the non-interference image is inputted into the traffic sign recognition model for recognition processing, such that a correct vehicle control instruction can be subsequently generated, thereby solving the problem that a wrong recognition on the traffic sign is caused by the attack of the adversarial sample against the traffic sign recognition model. In addition, the interference of the adversarial sample in the traffic image may be reduced, and thus, the accuracy of the image recognition is improved, and the safety of the autonomous driving or intelligent driving is improved.

The technical solution of the embodiment of the present disclosure may be simultaneously applicable to a situation of a black-box attack initiated by some illegal users when the deep learning model used for the traffic sign recognition is uncertain and a situation of a white-box attack initiated when the deep learning model is certain. The black-box attack is different from the white-box attack. The white-box attack often refers to that, an adversarial sample algorithm such as a fast gradient sign method (FGSM), a CW (Clarke and Wright) algorithm and a Jacobian-based saliency map approach (JSMA) is used with pertinence when the model structure and specific parameter of the deep learning model are known, to perform the white-box attack. The black-box attack refers to that, when the deep learning model is uncertain, a complex and changeable black-box attack would be initiated through the disturbance mode such as the noise, the affine transformation, the filter blurring, the brightness transformation, and the monochromatization. According to the embodiment of the present disclosure, the situations of the black-box attack and the white-box attack are effectively resolved, and each kind of disturbance is filtered out, and thus, the deep learning model for the traffic sign recognition can effectively perform the recognition and the filtering.

### Second Embodiment

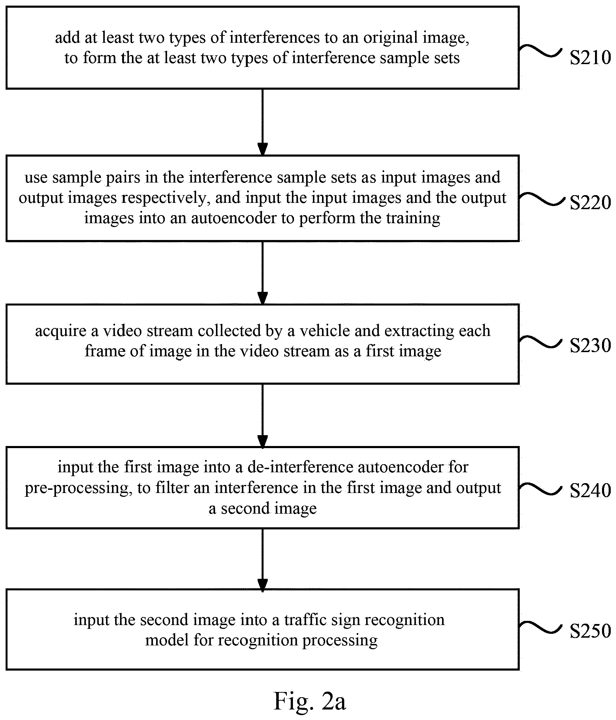

Fig. 2a is a flowchart of a method for recognizing a traffic image provided by a second embodiment of the present disclosure. On the basis of each alternative scheme in the above embodiment, this embodiment provides the training process for the de-interference autoencoder. As shown in Fig. 2a, the method for recognizing a traffic image provided in the embodiment of the present disclosure includes the following steps:
S210, adding at least two types of interferences to an original image, to form the at least two types of interference sample sets.

Here, the original image is a image to which an interference is not added, and the content of the image refers to content such as the real traffic light, traffic indication board, lane line, and guide board. The original image may be captured by a terminal having a camera function, or may be intercepted from a certain video. After the original image is acquired, the generation of a sample set is started. First, the original image is processed by performing one or more of disturbance modes: adding noise, adding an affine transformation, superimposing a filter blurring transformation, superimposing a brightness transformation, and superimposing a monochromatic transformation, to form an interference image. Then, the original image and the interference image are served as a sample pair, and at least two types of sample pair sets are selected as the interference sample sets. That each type of interference sample set adopts an identical combination of disturbance modes is ascertained.

For example, an affine transformation and a filter blurring transformation are added to a first original image to generate a first interference image, the first original image and the first interference image are a sample pair. Similarly, the affine transformation and the filter blurring transformation are added to other original images to generate corresponding interference images, to obtain a plurality of sample pairs. In this way, the sample pairs obtained through the same transformations belong to the same type of sample pair set, that is, a first type of sample pair set. If, in the first original image, a filter blurring transformation is superimposed, a brightness transformation is superimposed and a monochromatic transformation is superimposed, then a corresponding interference image would also be generated, and a corresponding sample pair is formed. At this time, the obtained sample pair set is a second type of sample pair set different from the first type of sample pair set. Similarly, after different kinds of interference information and different amounts of interference information are selected to be superimposed on the original image, more different types of sample pair set may be obtained. Therefore, at least two types of sample pair sets are selected as the interference sample sets, such that training samples are more comprehensive and can cover more disturbance modes, and thus, the filtering rate of the adversarial sample can be improved.

In another implementation, before the original image is processed by performing one or more of the disturbance modes: adding noise, adding an affine transformation, superimposing a filter blurring transformation, superimposing a brightness transformation, or superimposing a monochromatic transformation, at least one disturbance parameter value in any type of disturbance mode may also be adjusted to form at least two disturbances, and thus, the number of disturbance images generated for the same original image is increased, thereby increasing the number of sample pair sets. For example, the adjusting at least one disturbance parameter value in the any type of disturbance mode, to form the at least two disturbances may include at least one of:

adjusting a scale ratio parameter in the affine transformation, to form disturbances of a different scale rations; adjusting an input parameter of a blur controller in the filter blurring, to form disturbances of different degrees of blur; adjusting a brightness value in the brightness transformation, to form disturbances of different brightness; or adjusting a pixel value of a pixel point in the monochromatic transformation, to form disturbances of different colors. When one of the disturbance modes includes a plurality of disturbance parameters, the plurality of parameter values may be changed at the same time, to form different interference images. For example, a flip angle parameter and a shear angle parameter in the affine transformation and the brightness value in the brightness transformation are changed at the same time.

S220, using sample pairs in the interference sample sets as input images and output images respectively, and inputting the input images and the output images into an autoencoder to perform the training.

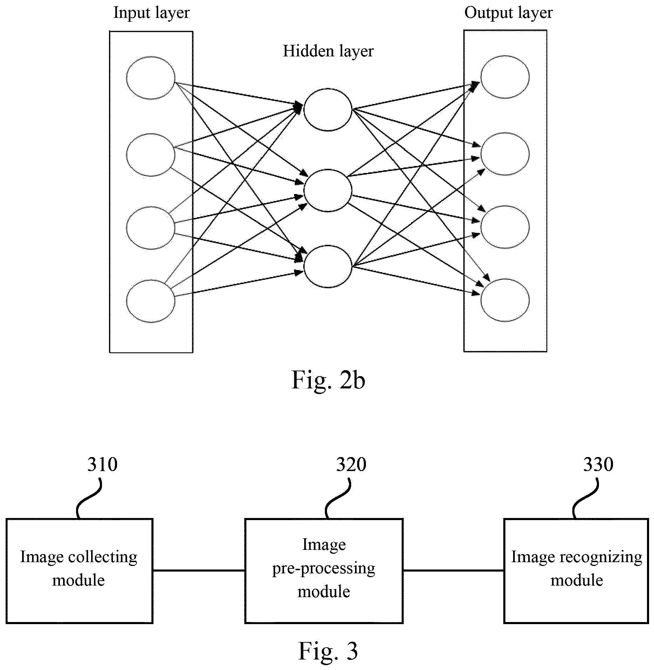

Autoencoders (Auto encoders) are common models in deep learning, and its structure is a three-layer neural network structure, including an input layer, a hidden layer, and an output layer. Here, the output layer and the input layer have the same number of dimensions, specific reference may be made to Fig. 2b. Specifically, the input layer and the output layer respectively represent the input layer and the output layer of the neural network, and the hidden layer acts as an encoder and decoder. The encoding process is a process of converting from the input layer of more dimensions to the hidden layer of less dimensions, conversely, the decoding process is a process of converting from the hidden layer of less dimensions to the output layer of more dimensions. Therefore, the autoencoder is a lossy conversion process, and defines a loss function by comparing the difference between the input layer and the output layer. Data is not required to be marked during the training, and the entire training is a process of continuously obtaining the solution of the minimization of the loss function.

In this embodiment, an interference image to which noise is superimposed in any sample pair is inputted into the input layer. Next, a image restored by the hidden layer of the autoencoder is obtained at the output layer. Then, the original image and the restored image are inputted into the loss function simultaneously, and whether the automatic encoder needs to be optimized is determined based on the output result of the loss function. When the output result of the loss function meets a preset condition, the training may be stopped, and thus, the de-interference autoencoder may be finally obtained.

In another implementation, since the image information in a video stream collected by a vehicle is image information which is temporally consecutive and has an association relationship, an interference autoencoder may be a convolutional neural network model of an LSTM (Long Short-Term Memory). Then, the samples in the interference sample set include at least two consecutive frames of images. That is, the original image refers to an original sample group composed of at least two consecutive frames of images, and an interference image group corresponding to the original sample group refers to images on which interference information of an identical disturbance mode is superimposed on the basis of the original sample group. Here, the identical disturbance mode refers to that the adopted combination of disturbance modes are identical. A combination of disturbance modes may include a single disturbance mode, or may include a combination of two or more disturbance modes. In one type of anti-interference sample set, the adopted combinations of disturbance modes are identical, but the specific parameter used for each disturbance mode may be the same or different. The disturbance mode used in the embodiment of the present disclosure may be more than one. Alternatively, the disturbance mode includes at least two of the noise, the affine transformation, the filter blurring, the brightness transformation, or the monochromatization.

In a preferred implementation, before the training of the autoencoder, compression processing may also be performed on the sample images in the sample set at the color dimension, i.e., compression processing in terms of RGB color information, gray scale, or RGB color information and gray scale, etc.. This is because the recognition for a traffic sign depends mainly on the structure, shape and main color of an object, and is not sensitive to a detailed color. After the image is compressed at the color dimension, the amount of data calculated during image processing may be reduced.

S230, acquiring a video stream collected by a vehicle and extracting each frame of image in the video stream as a first image.

S240, inputting the first image into a de-interference autoencoder for pre-processing, to filter an interference in the first image and output a second image.

S250, inputting the second image into a traffic sign recognition model for recognition processing.

For specific content of S230-S250, reference may be made to the related description in the first embodiment.

According to the technical solution of this embodiment, interference noises is added to the original image through different disturbance modes to form different types of interference sample sets, for training the autoencoder, to obtain the de-interference autoencoder capable of filtering out a plurality of interferences. Then, the de-interference is used to perform the de-interference pre-processing on the images in the video stream collected by the vehicle, to obtain the images in which interferences are filtered out. The pre-processed image is inputted into the traffic sign recognition model to perform the recognition processing, and thus, a correct vehicle control instruction is generated, thereby solving the problem that a wrong recognition on the traffic sign is caused by the attack of the adversarial sample against the traffic sign recognition model. In addition, the interference of the adversarial sample in the traffic image may be reduced, and thus, the accuracy of the image recognition is improved, and the safety of the autonomous driving or intelligent driving is improved.

### Third Embodiment

Fig. 3 is a schematic structural diagram of an apparatus for recognizing a traffic image provided by a third embodiment of the present disclosure. This embodiment of the present disclosure may be applicable to a situation where an attack, which is based on an adversarial sample, on a model for recognizing a road sign and a traffic light of an unmanned vehicle or of an intelligent driving control system is resisted.

As shown in Fig. 3, the apparatus for recognizing a traffic image in this embodiment of the present disclosure includes: a image collecting module 310, a image pre-processing module 320 and a image recognizing module 330.

Here, the image collecting module 310 is configured to acquire a video stream collected by a vehicle and extract each frame of image in the video stream as a first image. The image pre-processing module 320 is configured to input the first image into a de-interference autoencoder for pre-processing, to filter an interference in the first image and output a second image, the de-interference autoencoder being obtained by training with at least two types of interference sample sets, and disturbance modes added to different types of interference sample sets including at least two of: noise, an affine transformation, filter blurring, a brightness transformation, or monochromatization. The image recognizing module 330 is configured to input the second image into a traffic sign recognition model for recognition processing.

According to the technical solution of this embodiment, the image in the video stream collected by the vehicle is inputted into the de-interference autoencoder, and the image in which the interference is filtered out is obtained through the pre-processing by the de-interference autoencoder. Then, the non-interference image is inputted into the traffic sign recognition model for recognition processing, and thus, a correct vehicle control instruction is generated, thereby solving the problem that a wrong recognition on the traffic sign is caused by the attack of an adversarial sample against the traffic sign recognition model. In addition, the interference of the adversarial sample in the traffic image may be reduced, and thus, the accuracy of the image recognition is improved, and the safety of the autonomous driving or intelligent driving is improved.

In an embodiment, the apparatus for recognizing a traffic image further includes: a sample set generating module, configured to add at least two types of interferences to an original image, to form the at least two types of interference sample sets; and a model training module, configured to use a sample pair in each of the interference sample sets as an input image and an output image respectively, and input the input image and the output image into an autoencoder to perform training.

In an embodiment, the sample set generating module is configured to: acquire the original image; process the original image by performing one or more of disturbance modes: adding noise, adding an affine transformation, superimposing a filter blurring transformation, superimposing a brightness transformation or superimposing a monochromatic transformation, to form an interference image; and use the original image and the interference image as the sample pair, and select at least two types of sample pair sets as the interference sample sets.

In an embodiment, the sample set generating module is further configured to adjust at least one disturbance parameter value in any type of disturbance mode, to form at least two disturbances.

In an embodiment, adjusting the at least one disturbance parameter value in any type of the disturbance mode to form the at least two disturbances includes at least one of: adjusting a scale ratio parameter in the affine transformation, to form disturbances of different scale ratios; adjusting an input parameter of a blur controller in the filter blurring, to form disturbances of different degrees of blur; adjusting a brightness value in the brightness transformation, to form disturbances of different brightness; or adjusting a pixel value of a pixel point in the monochromatic transformation, to form disturbances of different colors.

In an embodiment, an input layer and an output layer of the autoencoder have identical structures, to make the output image and the original image have identical resolutions.

In an embodiment, the apparatus for recognizing a traffic image further includes an image compressing module, configured to perform, before the first image is inputted into the de-interference autoencoder for the pre-processing, compression processing on the first image at the color dimension.

In an embodiment, the de-interference autoencoder is a convolutional neural network model of an LSTM, and the interference sample sets include at least two consecutive frames of images.

The apparatus for recognizing a traffic image provided by the embodiment of the present disclosure may perform the method for recognizing a traffic image provided by any embodiment of the present disclosure, and possesses functional modules for performing the method and corresponding beneficial effects.

### Fourth Embodiment

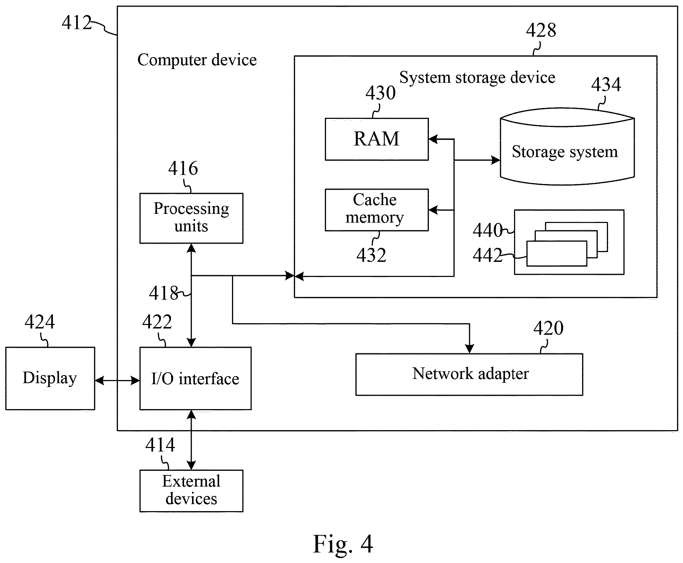

Fig. 4 is a schematic structural diagram of a computer device in a fourth embodiment of the present disclosure. Fig. 4 is a block diagram of an exemplary computer device 412 adapted to implement embodiments of the present disclosure. The computer device 412 shown in Fig. 4 is merely an example, and should not bring any limitation to the functionality and the scope of use of the embodiments of the present disclosure.

As shown in Fig. 4, the computer device 412 is expressed in the form of a general purpose computing device. The components of the computer device 412 may include, but not limited to, one or more processors or processing units 416, a system storage device 428, and a bus 418 connecting different system components (including the system storage device 428 and the processing units 416) .

The bus 418 represents one or more of several types of bus structures, including a storage device bus or a storage device controller, a peripheral bus, an graphics acceleration port, a processor or a local bus using any of various bus structures. By way of example, such architectures include, but not limited to, an Industry Standard Architecture (ISA) bus, a Micro Channel Architecture (MCA) bus, an Enhanced ISA (EISA) bus, a Video Electronics Standards Association (VESA) local bus, and a Peripheral Component Interconnect (PCI) bus.

The computer device 412 typically includes various computer system readable media. Such media may be any available medium that can be accessed by the computer device 412, and include volatile and non-volatile media and removable and non-removable media.

The system storage device 428 may include a computer system readable medium in the form of volatile storage device, for example, a random access memory (RAM) 430 and/or a cache memory 432. The computer device 412 may further include other removable/non-removable and volatile/non-volatile computer system storage media. By way of example only, a storage system 434 may be used for reading from and writing to a non-removable and non-volatile magnetic medium (not shown in Fig. 4, and typically called a "hard disk drive"). Although not shown in Fig. 4, a magnetic disk drive for reading from and writing to a removable and non-volatile magnetic disk (e.g., a "floppy disk"), and an optical disk drive for reading from or writing to a removable and non-volatile optical disk such as a CD-ROM, DVD-ROM or other optical media may be provided. In such situations, each drive may be connected to the bus 418 through one or more data medium interfaces. The storage device 428 may include at least one program product having a set of program modules (e.g., at least one program module) that are configured to perform the functions of each embodiment of the present disclosure.

A program/utility 440, having a set of program modules 442 (at least one program module), may be stored in, for example, the storage device 428. Such program modules 442 include, but not limited to, an operating system, one or more application programs, other program modules, and program data, and each of the operating system, the one or more application programs, the other program modules and the program data or some combination thereof may include an implementation of a networking environment. The program modules 442 generally perform the functions and/or methodologies in embodiments described in the present disclosure.

The computer device 412 may also communicate with one or more external devices 414, for example, a keyboard, a pointing device and a display 24, and also communicate with one or more devices that enable a user to interact with the computer device 412, and/or any device (e.g., a network card and a modem) that enables the computer device 412 to communicate with one or more other computing devices. Such communication may be implemented via an input/output (I/O) interface 422. Moreover, the computer device 412 may communicate with one or more networks (e.g., a local area network (LAN), a wide area network (WAN), and/or a public network (e.g., the Internet)) via a network adapter 420. As shown in the drawing, the network adapter 420 communicates with other modules of the computer device 412 via the bus 418. It should be understood that although not shown in Fig. 4, other hardware and/or software modules could be used in combination with the computer device 412, the modules including, but not limited to, a microcode, a device driver, a redundant processing unit, an external disk drive array, a RAID system, a tape drive, a data backup storage system, etc.

The processing units 416 runs a program stored in the system storage device 428 to perform each functional application and data processing, for example, to implement a method for recognizing a traffic image, the method mainly including: acquiring a video stream collected by a vehicle, and extracting each frame of image in the video stream as a first image; inputting the first image into a de-interference autoencoder to perform pre-processing, to filter out an interference in the first image and output a second image, the de-interference autoencoder being obtained by training with at least two types of interference sample sets, and disturbance modes added to different types of interference sample sets including at least two of: noise, an affine transformation, filter blurring, a brightness transformation, or monochromatization; and inputting the second image into a traffic sign recognition model for recognition processing.

### Fifth Embodiment

The fifth embodiment of the present disclosure provides a computer readable storage medium, storing a computer program, where the computer program, when executed by a processor, implements the method for recognizing a traffic image, the method includes: acquiring a video stream collected by a vehicle, and extracting each frame of image in the video stream as a first image; inputting the first image into a de-interference autoencoder for pre-processing, to filter out an interference in the first image and output a second image, the de-interference autoencoder being obtained by training with at least two types of interference sample sets, and disturbance modes added to different types of interference sample sets including at least two of: noise, an affine transformation, filter blurring, a brightness transformation, or monochromatization; inputting the second image into a traffic sign recognition model for recognition processing.

The computer storage medium in embodiments of the present disclosure may be a computer readable medium or any combination of a plurality of computer readable media. The computer readalbe medium may be a computer readable signal medium or a computer readalbe storage medium. The computer readable storage medium may include, but not limited to: electric, magnetic, optical, electromagnetic, infrared, or semiconductor systems, apparatus, elements, or a combination any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In the present disclosure, the computer readable storage medium may be any tangible medium containing or storing programs which can be used by a command execution system, apparatus or element or incorporated thereto.

The computer readable signal medium may include data signal in the base band or propagating as parts of a carrier, in which computer readable program codes are carried. The propagating signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element.

The program codes contained on the computer readable medium may be transmitted with any suitable medium including but not limited to: wireless, wired, optical cable, RF medium etc., or any suitable combination of the above.

A computer program code for executing operations in some embodiments of the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider).

## Claims

1. A method for recognizing a traffic image, comprising:
acquiring a video stream collected by a vehicle, and extracting each frame of image in the video stream as a first image;
inputting the first image into a de-interference autoencoder for pre-processing, to filter out an interference in the first image and output a second image, the de-interference autoencoder being obtained by training with at least two types of interference sample sets, and disturbance modes added to different types of interference sample sets including at least two of: noise, an affine transformation, filter blurring, a brightness transformation, or monochromatization; and
inputting the second image into a traffic sign recognition model for recognition processing.

2. The method according to claim 1, further comprising:
adding at least two types of interferences to an original image, to form the at least two types of interference sample sets; and
using a sample pair in each of the interference sample sets as an input image and an output image respectively, and inputting the input image and the output image into an autoencoder to perform training.

3. The method according to claim 2, wherein the adding at least two types of interferences to the original image, to form the at least two types of interference sample sets comprises:
acquiring the original image;
processing the original image by performing at least one of disturbance modes: adding noise, adding an affine transformation, superimposing a filter blurring transformation, superimposing a brightness transformation or superimposing a monochromatic transformation, to form an interference image; and
using the original image and the interference image as the sample pair, and selecting at least two types of sample pair sets as the interference sample sets.

4. The method according to claim 3, wherein before processing the original image by performing at least one of disturbance modes: adding noise, adding an affine transformation, superimposing a filter blurring transformation, superimposing a brightness transformation or superimposing a monochromatic transformation, the method further comprises:
adjusting at least one disturbance parameter value in any type of disturbance mode, to form at least two disturbances.

5. The method according to claim 4, wherein the adjusting at least one disturbance parameter value in any type of disturbance mode, to form at least two disturbances comprises at least one of:
adjusting a scale ratio parameter in the affine transformation, to form disturbances of different scale ratios;
adjusting an input parameter of a blur controller in the filter blurring, to form disturbances of different degrees of blur;
adjusting a brightness value in the brightness transformation, to form disturbances of different brightness; or
adjusting a pixel value of a pixel point in the monochromatic transformation, to form disturbances of different colors.

6. The method according to any one of claims 2-5, wherein an input layer and an output layer of the autoencoder have identical structures, so that the output image and the original image have identical resolutions.

7. The method according to claim 6, wherein before inputting the first image into the de-interference autoencoder for pre-processing, the method further comprises:
performing compression processing on the first image at a color dimension.

8. The method according to claim 1, wherein the de-interference autoencoder is a convolutional neural network model of an LSTM, and the interference sample sets include at least two consecutive frames of images.

9. An apparatus for recognizing a traffic image, comprising:
a image collecting module, configured to acquire a video stream collected by a vehicle, and extract each frame of image in the video stream as a first image;
a image pre-processing module, configured to input the first image into a de-interference autoencoder for pre-processing, to filter out an interference in the first image and output a second image, the de-interference autoencoder being obtained by training with at least two types of interference sample sets, and disturbance modes added to different types of interference sample sets including at least two of: noise, an affine transformation, filter blurring, a brightness transformation, or monochromatization; and
a image recognizing module, configured to input the second image into a traffic sign recognition model for recognition processing.

10. The apparatus according to claim 9, further comprising:
a sample set generating module, configured to add at least two types of interferences to an original image, to form the at least two types of interference sample sets; and
a model training module, configured to use a sample pair in each of the interference sample sets as an input image and an output image respectively, and input the input image and the output image into an autoencoder to perform training.

11. An electronic device, comprising:
at least one processor; and
a storage device, configured to store at least one program,
wherein the at least one program, when executed by the at least one processor, cause the at least one processor to implement the method for recognizing a traffic image according to any one of claims 1-8.

12. A computer readable storage medium, storing a computer program, wherein the computer program, when executed by a processor, cause the processor to implement the method for recognizing a traffic image according to any one of claims 1-8.
